# EUROPEAN PATENT APPLICATION

(11) **EP 4 345 694 A1**
(43) Date of publication of application: **03.04.2024**
(21) Application number: 21949275.8
(22) Date of filing: 07.07.2021
(51) Int. Cl.: G06N 3/08, G10L 15/06, G10L 15/16

(54) **DATA PROCESSING DEVICE AND DATA PROCESSING METHOD**

(71) Applicant: MITSUBISHI ELECTRIC CORPORATION, Chiyoda-ku Tokyo 100-8310 (JP)
(72) Inventor: MINEZAWA, Akira, Tokyo 100-8310 (JP)
(74) Representative: Pfenning, Meinig & Partner mbB
(86) International application number: PCT/JP2021/025545
(87) International publication number: WO 2023/281640

(57) **Abstract**

A data processing device (10) includes: a first generating unit (11A) that generates a plurality of pieces of candidate input data (KND) including a plurality of pieces of trained input data (GND) and a plurality of pieces of untrained input data (MND); a second generating unit (11B) that generates a plurality of pieces of candidate intermediate data (KCD) including trained intermediate data (GCD) and untrained intermediate data; a first selection unit (12A) that selects one piece of candidate intermediate data (KCD) from among the plurality of pieces of candidate intermediate data (KCD), and preferentially selects one piece of candidate intermediate data (KCD) having a greater degree of heterogeneity when used for second training subsequent to first training as compared with the selected intermediate data (SCD); and a second selection unit (12B) that selects one piece of candidate input data (KND) corresponding to the one piece of candidate intermediate data (KCD) selected from among the plurality of pieces of candidate input data (KND) to be used in the second training.

## Description

### TECHNICAL FIELD

The present disclosure relates to a data processing device and a data processing method.

### BACKGROUND ART

In the acoustic model training support device described in Patent Literature 1, which is one of the above-described data processing devices, retraining is performed subsequent to training additionally.

### CITATION LIST

### PATENT LITERATURE

Patent Literature 1: JP 2016-161823 A

### SUMMARY OF INVENTION

### TECHNICAL PROBLEM

However, in the acoustic model training support device described above, all the trained data used in the training is used at the time of the retraining. As a result, there is a problem that the retraining may be performed even though it is within a range in which the training has already been performed and not necessary to newly perform the retraining.

In the acoustic model training support device described above, at the time of the retraining, in addition to the plurality of pieces of trained data, candidate data selected, among the plurality of pieces of candidate data to be used in addition to the plurality of pieces of trained data, from a relationship with the plurality of pieces of trained data, for example, a relationship between an intermediate feature amount of the plurality of pieces of candidate data and an intermediate feature amount of the plurality of pieces of trained data is newly used. Thus, there is also a problem that the retraining may not be performed even though it is a range which is out of the range where the training has already been performed and in which it would be desirable to newly perform the retraining.

An object of the present disclosure is at least one of suppressing the retraining from being performed within a range where the retraining is performed and it is not necessary to perform the retraining, and promoting the retraining to be performed in a range which is out of the range where the retraining is performed and in which it is desirable to perform the retraining.

### SOLUTION TO PROBLEM

In order to solve the above problems, a data processing device according to the present disclosure includes: a first generating unit to generate a plurality of pieces of candidate input data by putting together a plurality of pieces of trained input data used for first training in a machine learning model and a plurality of pieces of untrained input data not used for the first training; a second generating unit to generate a plurality of pieces of candidate intermediate data by putting together trained intermediate data given by inputting the plurality of pieces of the trained input data into the machine learning model and untrained intermediate data given by inputting the plurality of pieces of untrained input data into the machine learning model; a first selection unit to select one piece of candidate intermediate data from among the plurality of pieces of the candidate intermediate data, the first selection unit more preferentially selecting the one piece of candidate intermediate data having a greater degree of heterogeneity when used for second training subsequent to the first training as compared with selected intermediate data including selected trained intermediate data that is the trained intermediate data already selected and selected untrained intermediate data that is the untrained intermediate data already selected; and a second selection unit to select one piece of candidate input data, from among the plurality of pieces of the candidate input data, corresponding to the one piece of candidate intermediate data as data to be used at a time of the second training.

### ADVANTAGEOUS EFFECTS OF INVENTION

According to the data processing device of the present disclosure, it is possible to suppress the retraining from being performed within a range in which the training has been performed and it is unnecessary to perform the retraining, and it is possible to promote the retraining to be performed in a range which is out of the range in which the training has been performed and in which it is desirable to perform the retraining.

### BRIEF DESCRIPTION OF DRAWINGS

FIG. 1 is a functional block diagram of a data processing device 10 according to an embodiment.
FIG. 2 illustrates a configuration of a machine learning model KGM according to the embodiment.
FIG. 3 illustrates trained input data GND and trained intermediate data GCD according to the embodiment.
FIG. 4 illustrates untrained input data MND and untrained intermediate data MCD according to the embodiment.
FIG. 5 illustrates the configuration of the data processing device 10 according to the embodiment.
FIG. 6 is a flowchart illustrating an operation of the data processing device 10 according to the embodiment.
FIG. 7 is a state transition diagram of candidate input data KND according to the embodiment.
FIG. 8 is a state transition diagram (part 1) of candidate intermediate data KCD according to the embodiment.
FIG. 9 is a state transition diagram (part 2) of candidate intermediate data KCD according to the embodiment.
FIG. 10 is a state transition diagram (part 3) of candidate intermediate data KCD according to the embodiment.
FIG. 11 is a state transition diagram (part 4) of candidate intermediate data KCD according to the embodiment.
FIG. 12 is a state transition diagram (part 5) of candidate intermediate data KCD according to the embodiment.
FIG. 13 is a state transition diagram (part 6) of candidate intermediate data KCD according to the embodiment.
FIG. 14 is a state transition diagram (part 7) of candidate intermediate data KCD according to the embodiment.
FIG. 15 is a state transition diagram (part 8) of candidate intermediate data KCD according to the embodiment.
FIG. 16 is a flowchart illustrating an operation of a data processing device 10 according to a modification example.

### DESCRIPTION OF EMBODIMENTS

### Embodiment

### <Embodiment>

An embodiment of a data processing device according to the present disclosure will be described.

### <Configuration of Embodiment>

### <Function of Data Processing Device 10>

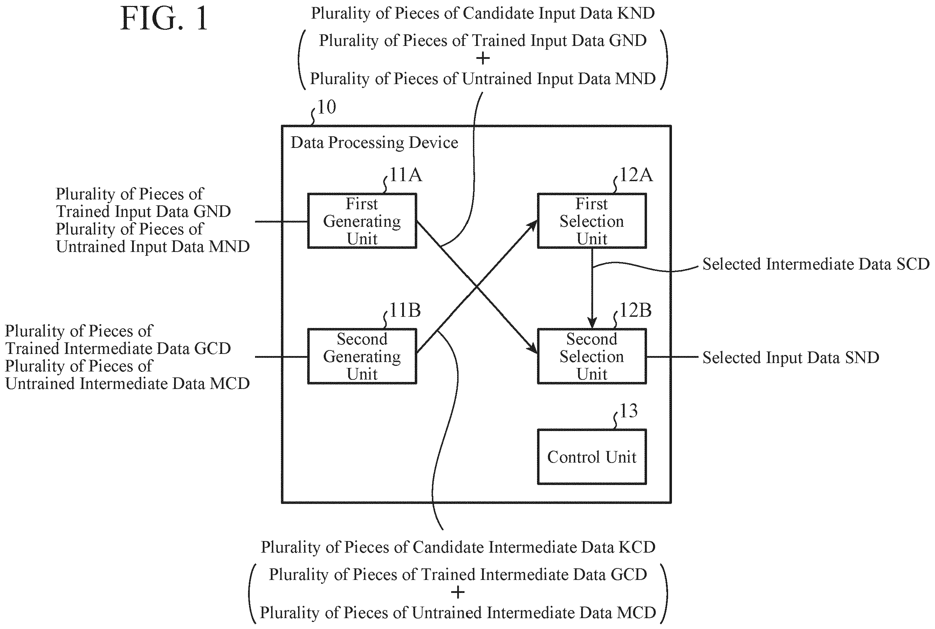

FIG. 1 is a functional block diagram of a data processing device 10 according to the embodiment. A function of the data processing device 10 according to the embodiment will be described with reference to FIG. 1.

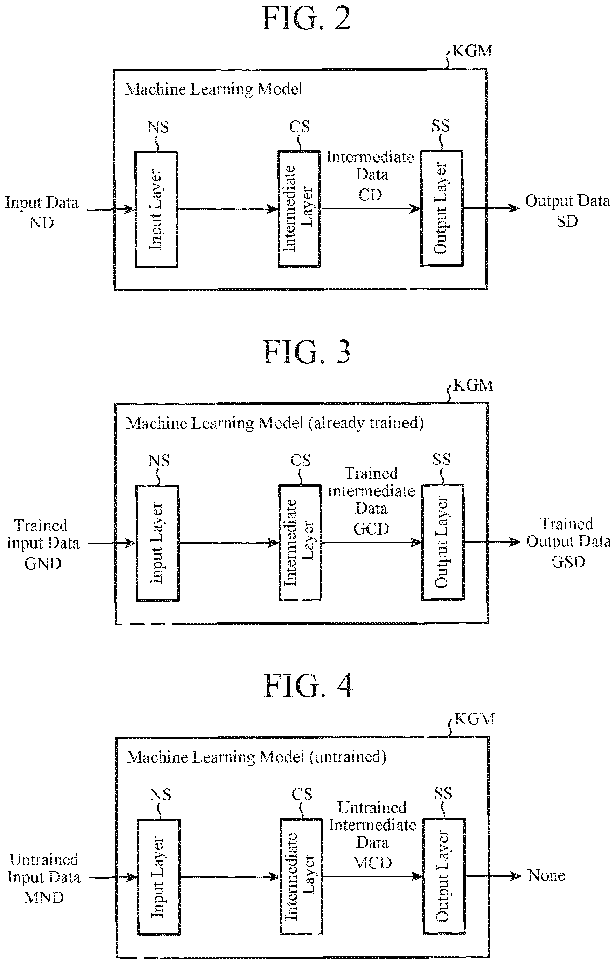

An object of the data processing device 10 of the embodiment is to receive inputs of trained input data GND, untrained input data MND, trained intermediate data GCD, and untrained intermediate data MCD, and output selected input data SND to be used for retraining subsequent to training of a machine learning model KGM (illustrated in FIG. 2). For this purpose, the data processing device 10 includes a first generating unit 11A, a second generating unit 11B, a first selection unit 12A, a second selection unit 12B and a control unit 13.

The data processing device 10 corresponds to a "data processing device 10", the first generating unit 11A corresponds to a "first generating unit", the second generating unit 11B corresponds to a "second generating unit", the first selection unit 12A corresponds to a "first selection unit", and the second selection unit 12B corresponds to a "second selection unit".

The trained input data GND corresponds to "trained input data", the untrained input data MND corresponds to "untrained input data", the trained intermediate data GCD corresponds to "trained intermediate data", and the untrained intermediate data MCD corresponds to "untrained intermediate data".

The training corresponds to "first training", and the retraining corresponds to "second training".

### <Configuration of Machine Learning Model KGM>

FIG. 2 illustrates a configuration of a machine learning model KGM according to the embodiment.

As illustrated in FIG. 2, the machine learning model KGM includes an input layer NS, an intermediate layer CS and an output layer SS, which are well known. In the machine learning model KGM, as conventionally known, training is performed in which the input layer NS receives an input of input data ND, the intermediate layer CS generates intermediate data CD from the input data ND, and the output layer SS generates output data SD from the intermediate data CD. In this training, in a case where the input layer NS, the intermediate layer CS and the output layer SS are constituted by neural networks, each of the input layer NS, the intermediate layer CS and the output layer SS is constituted by one or more neural network layers, and each has an independent number of layers.

### <Trained input data GND and Trained intermediate data GCD>

FIG. 3 illustrates the trained input data GND and the trained intermediate data GCD according to the embodiment.

The "trained input data GND" (also illustrated in FIG. 1) refers to the input data ND (illustrated in FIG. 2) already used for training the machine learning model KGM.

The "trained intermediate data GCD" (also illustrated in FIG. 1) refers to the intermediate data CD (illustrated in FIG. 2) generated by the intermediate layer CS in response to the trained input data GND described above.

Note that the "trained output data GSD" refers to the output data SD (illustrated in FIG. 2) generated by the output layer SS in response to the trained intermediate data GCD described above.

### <Untrained input data MND and Untrained intermediate data MCD>

FIG. 4 illustrates the untrained input data MND and the untrained intermediate data MCD according to the embodiment.

The "untrained input data MND" refers to the input data ND (illustrated in FIG. 2.) that has not yet been used for training the machine learning model KGM but has been used for the purpose of tentatively obtaining the untrained intermediate data MCD.

The "untrained intermediate data MCD" refers to the intermediate data CD (illustrated in FIG. 2) generated by the intermediate layer CS in response to the untrained input data MND described above.

Note that, since the untrained intermediate data MCD is tentatively obtained, the output layer SS does not generate the output data SD (illustrated in FIG. 2) corresponding to the trained output data GSD (illustrated in FIG. 3).

### <Function of Each Unit>

Referring back to FIG. 1, functions of the data processing device 10 will be described.

The first generating unit 11A generates a plurality of pieces of candidate input data KND by putting together a plurality of pieces of trained input data GND and a plurality of pieces of untrained input data MND.

The second generating unit 11B generates a plurality of pieces of candidate intermediate data KCD by putting together a plurality of pieces of trained intermediate data GCD and a plurality of pieces of untrained intermediate data MCD.

The first selection unit 12A selects one piece of candidate intermediate data KCD from among the plurality of pieces of candidate intermediate data KCD. Specifically, the first selection unit 12A more preferentially selects one piece of candidate intermediate data KCD having a greater degree of heterogeneity when used for the retraining than the plurality of pieces of selected intermediate data SCD among the plurality of pieces of candidate intermediate data KCD.

The "selected intermediate data SCD" includes selected trained intermediate data SGCD and selected untrained intermediate data SMCD.

The "selected trained intermediate data SGCD" is trained intermediate data GCD already selected by the first selection unit 12A among the plurality of pieces of trained intermediate data GCD (illustrated in FIG. 1).

The "selected untrained intermediate data SMCD" is untrained intermediate data MCD already selected by the first selection unit 12A among the plurality of pieces of untrained intermediate data MCD (illustrated in FIG. 1).

"Heterogeneous when used for retraining" means that, for example, the knowledge acquired by retraining when used for the retraining described above is likely to be different from the knowledge acquired by training when used for the training described above.

The second selection unit 12B selects one piece of candidate input data KND corresponding to one piece of candidate intermediate data KCD selected by the first selection unit 12A among the plurality of pieces of candidate input data KND generated by the first generating unit 11A as the selected input data SND to be used for retraining.

The candidate input data KND corresponds to "candidate input data", the candidate intermediate data KCD corresponds to "candidate intermediate data", the selected intermediate data SCD corresponds to "selected intermediate data", the selected trained intermediate data SGCD corresponds to "selected trained intermediate data", and the selected untrained intermediate data SMCD corresponds to "selected untrained intermediate data".

The control unit 13 monitors and controls the entire operation of the data processing device 10.

### <Configuration of Data Processing Device 10>

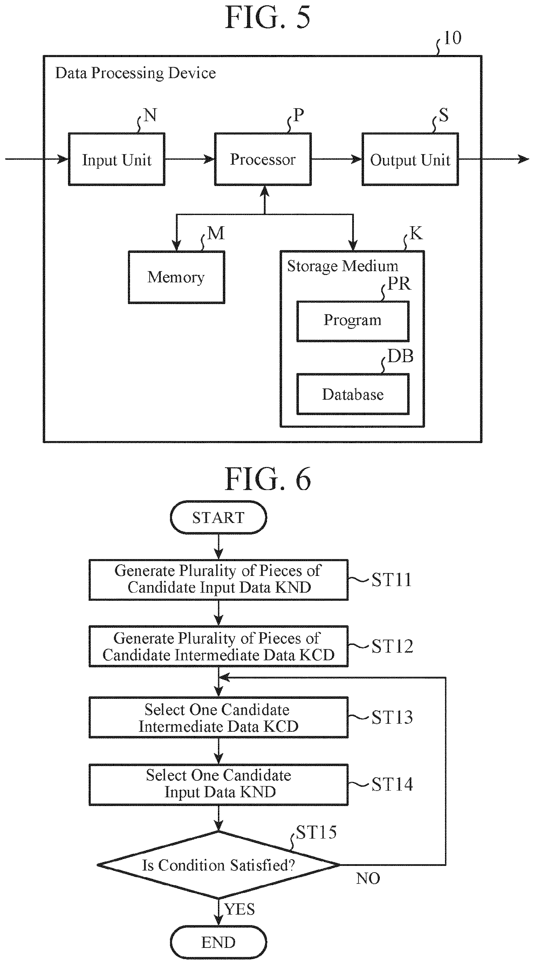

FIG. 5 illustrates the configuration of the data processing device 10 according to the embodiment.

As illustrated in FIG. 5, the data processing device 10 includes an input unit N, a processor P, an output unit S, a storage medium K and a memory M to perform the above-described functions.

The input unit N includes, for example, a keyboard, a mouse, a touch panel, a camera, a microphone and a scanner. The processor P is a core of a well-known computer that operates hardware in accordance with software. The output unit S includes, for example, a liquid crystal monitor, a printer and a touch panel. The memory M includes, for example, a dynamic random access memory (DRAM) and a static random access memory (SRAM). The storage medium K includes, for example, a hard disk drive (HDD), a solid state drive (SSD) and a read only memory (ROM).

The storage medium K stores a program PR and a database DB. The program PR is a set of commands that defines contents of processing to be executed by the processor P. The database DB is used, for example, to temporarily or permanently store the plurality of pieces of candidate input data KND and the plurality of pieces of candidate intermediate data KCD.

Regarding the relationship between the function and the configuration in the data processing device 10, on the hardware, the processor P executes the program PR stored in the storage medium K on the memory M, controls the operations of the input unit N and the output unit S as necessary, and operates the database DB in the storage medium K, thereby implementing the function of each of the units of the first generating unit 11A to the control unit 13.

### <Operation of Embodiment>

FIG. 6 is a flowchart illustrating an operation of the data processing device 10 according to the embodiment.

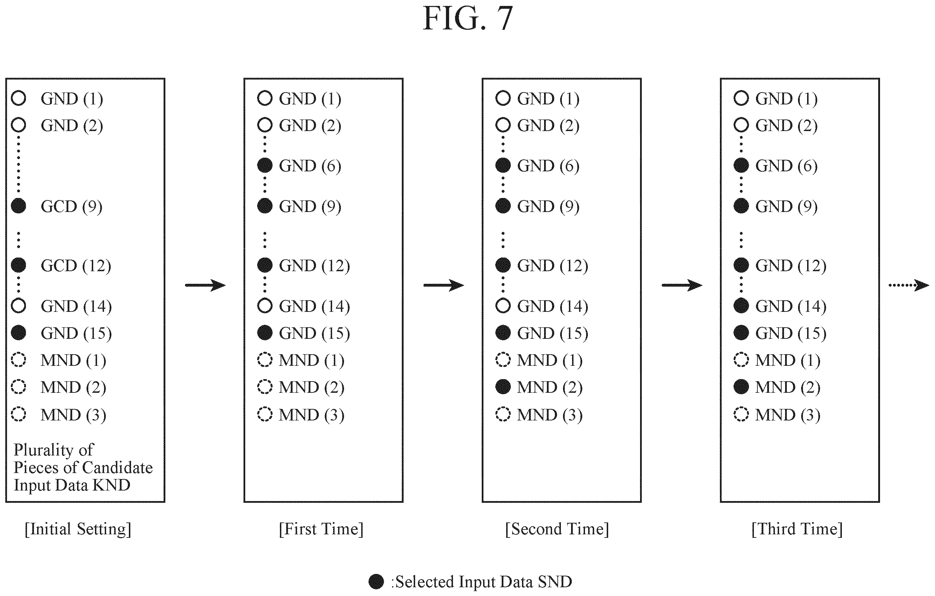

FIG. 7 is a state transition diagram of candidate input data KND according to the embodiment.

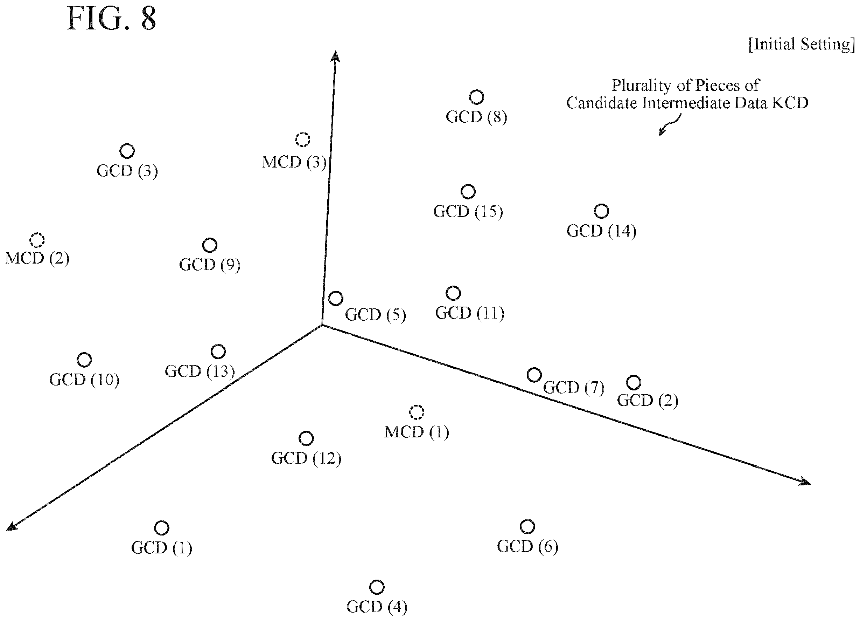

FIGS. 8 to 15 are state transition diagrams of the candidate intermediate data KCD according to the embodiment.

The operation of the data processing device 10 of the embodiment will be described with reference to the flowchart of FIG. 6, the state transition diagram of the candidate input data KND of FIG. 7, and the state transition diagrams of the candidate intermediate data KCD of FIGS. 8 to 15.

### <First Processing>

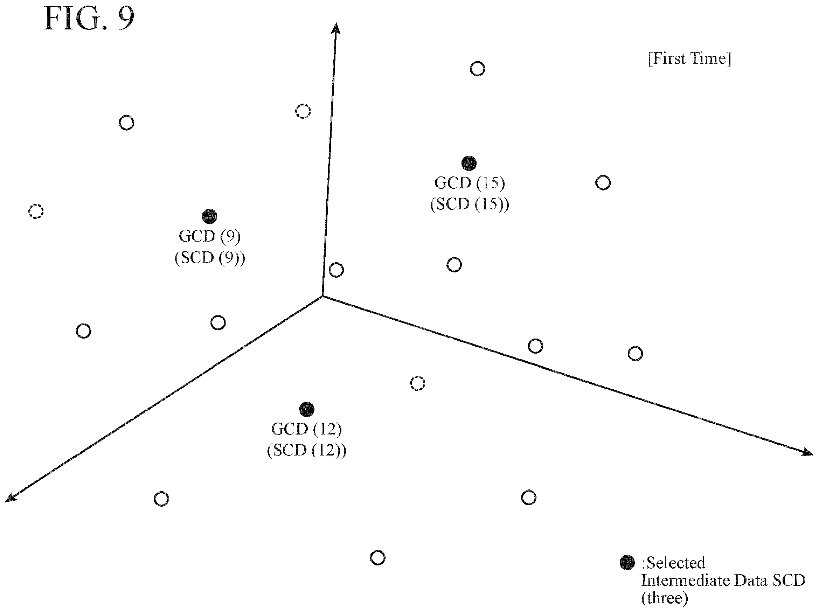

For ease of description and understanding, the following is assumed. However, in order to enable illustration in the present description, a case where the dimension of the intermediate data CD is three will be described (FIGS. 8 to 15).
(1A) The plurality of pieces of trained input data GND, the plurality of pieces of untrained input data MND, the plurality of pieces of trained intermediate data GCD, and the plurality of pieces of untrained intermediate data MCD are prepared in advance.
(1B) The plurality of pieces of trained intermediate data GCD and the plurality of pieces of untrained intermediate data MCD are distributed in the space illustrated in FIG. 8.
(1C) The three pieces of selected intermediate data SCD are given in advance. More specifically, as illustrated in FIG. 9, the trained intermediate data GCD (9), GCD (12), and GCD (15) are selected from among the plurality of pieces of candidate intermediate data KCD (illustrated in FIG. 8), and exist as the selected intermediate data SCD (9), SCD (12), and SCD (15).

Step ST11: The processor P (illustrated in FIG. 5) generates a plurality of pieces of candidate input data KND by putting together, as initial setting, a plurality of pieces of trained input data GND (1) to GND (15) and untrained input data MND (1) to MND (3) as the first generating unit 11A (illustrated in FIG. 1) as illustrated in FIG. 7.

Step ST12: The processor P generates a plurality of pieces of candidate intermediate data KCD by putting together, as initial setting, a plurality of pieces of trained intermediate data GCD (1) to GCD (15) and a plurality of pieces of untrained intermediate data MCD (1) to MCD (3) as the second generating unit 11B (illustrated in FIG. 1) as illustrated in FIG. 8.

Step ST13: The processor P, as the first selection unit 12A (illustrated in FIG. 1), calculates the K-neighbor distance with respect to the selected intermediate data SCD in each of the candidate intermediate data KCD other than the selected intermediate data SCD (9), SCD (12), and SCD (15). Herein, the K-neighbor distance is defined as a sum or an average of distances (Euclidean distance, Mahalanobis distance, and the like) between target data and K pieces of selected intermediate data SCD which are closest to the target data. In the present embodiment, since the K-neighbor distance is used as a scale for comparing the magnitude relationship of each data for the purpose of data selection, the K-neighbor distance may be defined as a sum of distances to K pieces of data or may be defined as an average of distances to K pieces of data. Hereinafter, in the present example, a case where the distance is a Euclidean distance and K=3 will be described.

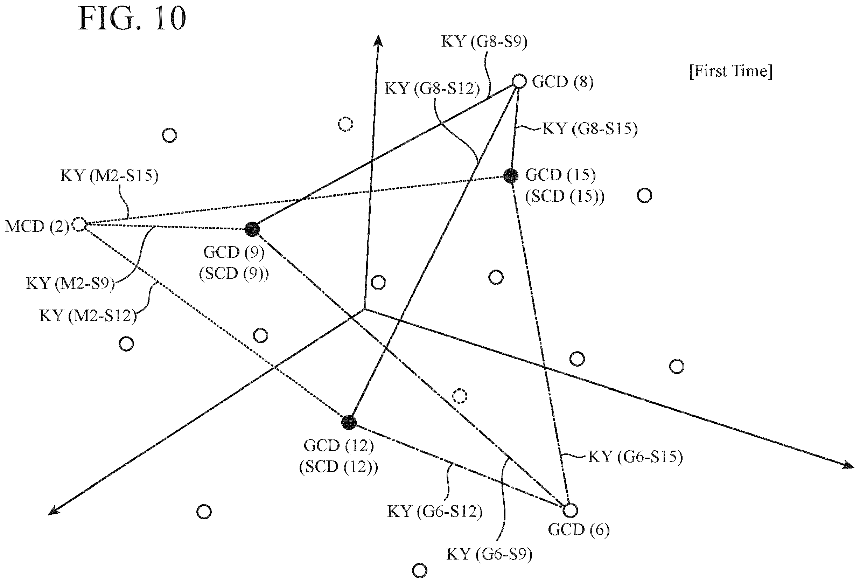

As illustrated in FIG. 10, for example, the first selection unit 12A calculates the following for the trained intermediate data GCD (8).
(1-1-1) Distance KY (G8-S9) between trained intermediate data GCD (8) and selected intermediate data SCD (9)
(1-1-2) Distance KY (G8-S12) between trained intermediate data GCD (8) and selected intermediate data SCD (12)
(1-1-3) Distance KY (G8-S15) between trained intermediate data GCD (8) and selected intermediate data SCD (15)
(1-1-4) K-neighbor distances KYav (G8) of distances KY (G8-S9), KY (G8-S12) and KY (G8-S15) (not illustrated)

Similar to the above, as illustrated in FIG. 10, for example, the first selection unit 12A calculates the following for the untrained intermediate data MCD (2).
(1-2-1) Distance KY (M2- S9) between untrained intermediate data MCD (2) and selected intermediate data SCD (9)
(1-2-2) Distance KY (M2-S12) between untrained intermediate data MCD (2) and selected intermediate data SCD (12)
(1-2-3) Distance KY (M2-S15) between untrained intermediate data MCD (2) and selected intermediate data SCD (15)
(1-2-4) K-neighbor distances KYav (M2) of distances KY (M2-S9), KY (M2-S12) and KY (M2-S15) (not illustrated)

Similar to the above, as illustrated in FIG. 10, for example, the first selection unit 12A calculates the following for the trained intermediate data GCD (6).
(1-3-1) Distance KY (G6-S9) between trained intermediate data GCD (6) and selected intermediate data SCD (9)
(1-3-2) Distance KY (G6-S12) between trained intermediate data GCD (6) and selected intermediate data SCD (12)
(1-3-3) Distance KY (G6-S15) between trained intermediate data GCD (6) and selected intermediate data SCD (15)
(1-3-4) K-neighbor distances KYav (G6) of distances KY (G6-S9), KY (G6-S12) and KY (G6-S15) (not illustrated)

Similarly, the first selection unit 12A calculates the K-neighbor distance to the selected intermediate data SCD for the remaining candidate intermediate data KCD. Then, the candidate intermediate data KCD, which has the longest K-neighbor distance KYav among each of the K-neighbor distances KYav of the candidate intermediate data KCD, is selected.

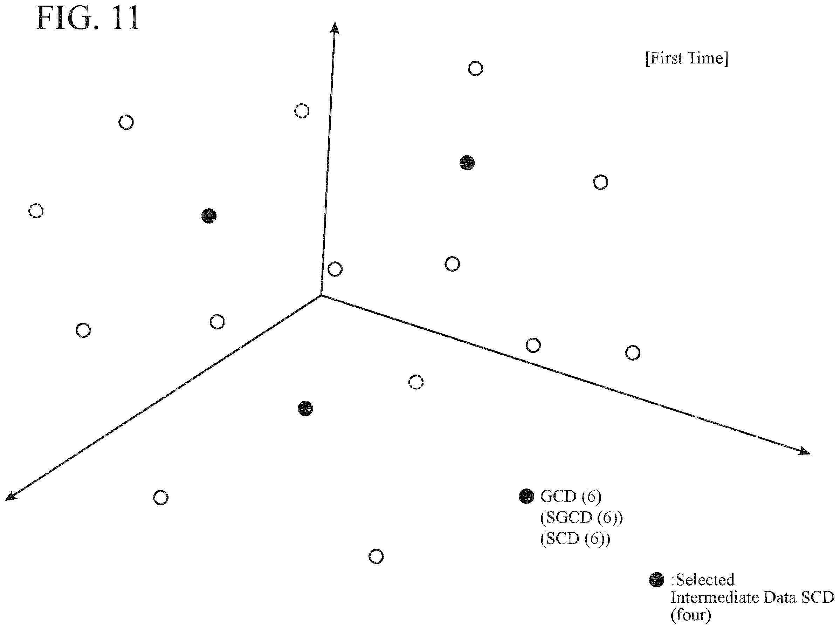

Herein, as illustrated in FIG. 11, for example, suppose that the first selection unit 12A selects the trained intermediate data GCD (6).

Step ST14: As illustrated in FIG. 7, the second selection unit 12B selects, for the first time, the trained intermediate data GCD (6) selected by the first selection unit 12A among the plurality of pieces of candidate input data KND, that is, the trained input data GND (6) corresponding to the selected trained intermediate data SGCD (6) as the selected input data SND (illustrated in FIG. 1).

Step ST15: The processor P determines, as the control unit 13 (illustrated in FIG. 1), whether or not the condition is satisfied. The "condition" is, for example, completing preparation of a predetermined number of pieces of selected input data SND or completing selection of all the candidate intermediate data KCD having the K-neighbor distance KYav exceeding a predetermined threshold with respect to the K-neighbor distance KYav.

When the condition is satisfied, the processing ends via "YES", and on the other hand, when the condition is not satisfied, the processing returns to step ST13 via " NO".

Herein, suppose that the condition is not satisfied.

### <Second Processing>

Step ST13: The first selection unit 12A calculates K-neighbor distance between each of the candidate intermediate data KCD other than the four pieces of selected intermediate data SCD (6), SCD (9), SCD (12) and SCD (15) and the four pieces of selected intermediate data SCD.

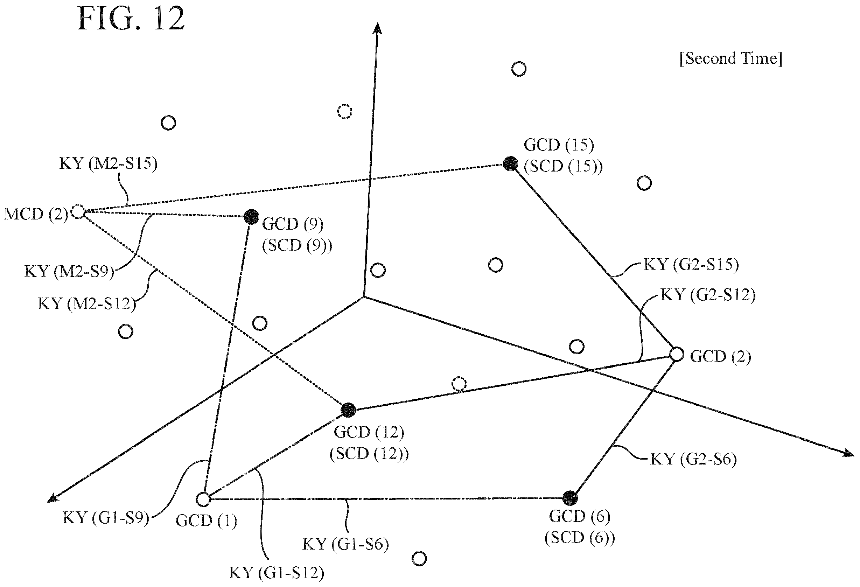

Hereinafter, as illustrated in FIG. 12, for example, suppose the following for the trained intermediate data GCD (2), the untrained intermediate data MCD (2) and the trained intermediate data GCD (1).
(2A) The three selected intermediate data SCD (6), SCD (12) and SCD (15) are closest to the trained intermediate data GCD (2).
(2B) The three selected intermediate data SCD (9), SCD (12) and SCD (15) are closest to the untrained intermediate data MCD (2).
(2C) The three selected intermediate data SCD (6), SCD (9) and SCD (12) are closest to the trained intermediate data GCD (1).

Similar to the above, as illustrated in FIG. 12, for example, the first selection unit 12A calculates the following for the trained intermediate data GCD (2). For the distance calculated in the first processing, instead of the calculation, the result of the first processing may be stored and used as it is.
(2-3-1) Distance KY (G2-S6) between trained intermediate data GCD (2) and selected intermediate data SCD (6)
(2-3-2) Distance KY (G2-S12) between trained intermediate data GCD (2) and selected intermediate data SCD (12)
(2-3-3) Distance KY (G2-S15) between trained intermediate data GCD (2) and selected intermediate data SCD (15)
(2-3-4) K-neighbor distances KYav (G2) of distances KY (G2-S6), KY (G2-S12) and KY (G2-S15) (not illustrated)

Similar to the above, as illustrated in FIG. 12, for example, the first selection unit 12A calculates the following for the untrained intermediate data MCD (2). For the distance calculated in the first processing, instead of the calculation, the result of the first processing may be stored and used as it is.
(2-2-1) Distance KY (M2-S9) between untrained intermediate data MCD (2) and selected intermediate data SCD (9)
(2-2-2) Distance KY (M2-S12) between untrained intermediate data MCD (2) and selected intermediate data SCD (12)
(2-2-3) Distance KY (M2-S15) between untrained intermediate data MCD (2) and selected intermediate data SCD (15)
(2-2-4) K-neighbor distances KYav (M2) of distances KY (M2-S9), KY (M2-S12) and KY (M2-S15) (not illustrated)

Similar to the above, as illustrated in FIG. 12, for example, the first selection unit 12A calculates the following for the trained intermediate data GCD (1). For the distance calculated in the first processing, instead of the calculation, the result of the first processing may be stored and used as it is.
(2-1-1) Distance KY (G1-S6) between trained intermediate data GCD (1) and selected intermediate data SCD (6)
(2-1-2) Distance KY (G1-S9) between trained intermediate data GCD (1) and selected intermediate data SCD (9)
(2-1-3) Distance KY (G1-S12) between trained intermediate data GCD (1) and selected intermediate data SCD (12)
(2-1-4) K-neighbor distances KYav (G1) of distances KY (G1-S6), KY (G1-S9) and KY (G1-S12) (not illustrated)

Similarly, the first selection unit 12A calculates the K-neighbor distance to the selected intermediate data SCD for the remaining candidate intermediate data KCD. Then, the candidate intermediate data KCD, which has the longest K-neighbor distance KYav among each of the K-neighbor distance KYav of the candidate intermediate data KCD, is selected.

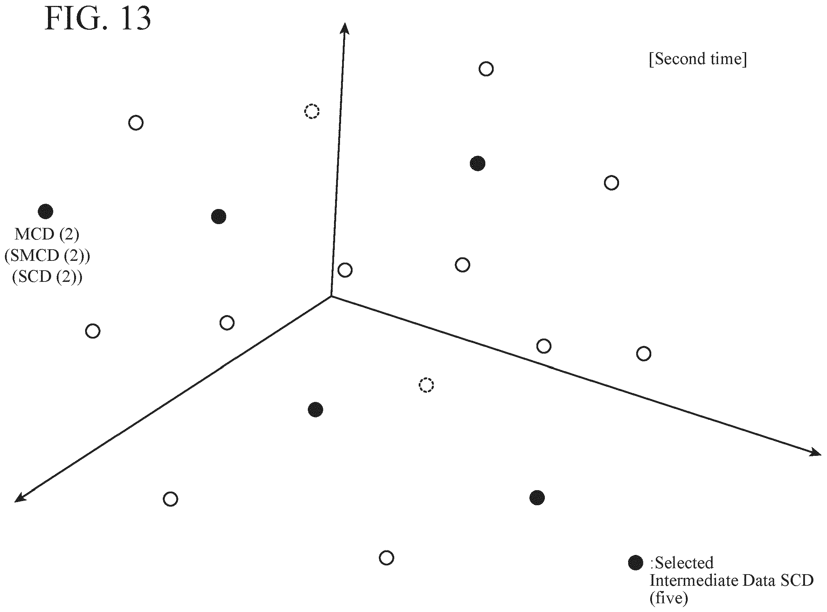

Herein, as illustrated in FIG. 13, for example, suppose that the first selection unit 12A selects the untrained intermediate data MCD (2).

Step ST14: As illustrated in FIG. 7, the second selection unit 12B selects the untrained intermediate data MCD (2) selected by the first selection unit 12A from among the plurality of pieces of candidate input data KND, that is, the untrained input data MND (2) corresponding to the selected untrained intermediate data SMCD (2) as the selected input data SND (illustrated in FIG. 1).

Step ST15: The control unit 13 determines whether or not the condition is satisfied.

Herein, suppose that the condition is not satisfied. The processing returns to step ST13 again after "NO".

### <Third Processing>

Step ST13: The first selection unit 12A calculates K-neighbor distance between each of all the candidate intermediate data KCD other than the five pieces of selected intermediate data SCD (2), SCD (6), SCD (9), SCD (12) and SCD (15) and the five pieces of selected intermediate data SCD.

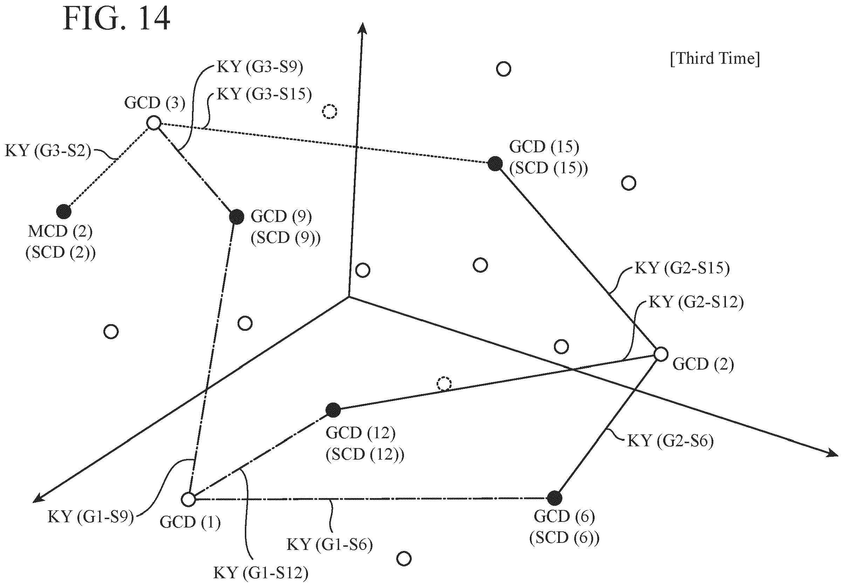

Hereinafter, as illustrated in FIG. 14, for example, suppose the following for the trained intermediate data GCD (2), GCD (3) and GCD (1).
(3A) The three selected intermediate data SCD (6), SCD (12) and SCD (15) are closest to the trained intermediate data GCD (2).
(3B) The three selected intermediate data SCD (2), SCD (9) and SCD (15) are closest to the trained intermediate data GCD (3).
(3C) The three selected intermediate data SCD (6), SCD (9) and SCD (12) are closest to the trained intermediate data GCD (1).

As illustrated in FIG. 14, for example, the first selection unit 12A calculates the following for the trained intermediate data GCD (2). For the distance calculated in the first and second processing, instead of the calculation, the result of the first and second processing may be stored and used as it is.
(3-3-1) Distance KY (G2-S6) between trained intermediate data GCD (2) and selected intermediate data SCD (6)
(3-3-2) Distance KY (G2-S12) between trained intermediate data GCD (2) and selected intermediate data SCD (12)
(3-3-3) Distance KY (G2-S15) between trained intermediate data GCD (2) and selected intermediate data SCD (15)
(3-3-4) K-neighbor distances KYav (G2) of distances KY (G2-S6), KY (G2-S12) and KY (G2-S15) (not illustrated)

Similar to the above, as illustrated in FIG. 1, for example, the first selection unit 12A calculates the following for the trained intermediate data GCD (3). For the distance calculated in the first and second processing, instead of the calculation, the result of the first and second processing may be stored and used as it is.
(3-2-1) Distance KY (G3-S2) between trained intermediate data GCD (3) and selected intermediate data SCD (2)
(3-2-2) Distance KY (G3-S9) between trained intermediate data GCD (3) and selected intermediate data SCD (9)
(3-2-3) Distance KY (G3-S15) between trained intermediate data GCD (3) and selected intermediate data SCD (15)
(3-2-4) K-neighbor distances KYav (G3) of distances KY (G3-S2), KY (G3-S9) and KY (G3-S15) (not illustrated)

Similar to the above, as illustrated in FIG. 14, for example, the first selection unit 12A calculates the following for the trained intermediate data GCD (1). For the distance calculated in the first and second processing, instead of the calculation, the result of the first and second processing may be stored and used as it is.
(3-1-1) Distance KY (G1-S6) between trained intermediate data GCD (1) and selected intermediate data SCD (6)
(3-1-2) Distance KY (G1-S9) between trained intermediate data GCD (1) and selected intermediate data SCD (9)
(3-1-3) Distance KY (G1-S12) between trained intermediate data GCD (1) and selected intermediate data SCD (12)
(3-1-4) K-neighbor distances KYav (G1) of distances KY (G1-S6), KY (G1-S9) and KY (G1-S12) (not illustrated)

Similarly, the first selection unit 12A calculates the K-neighbor distance to the selected intermediate data SCD for the remaining candidate intermediate data KCD. Then, the candidate intermediate data KCD, which has each K-neighbor distance KYav of the candidate intermediate data KCD, is selected.

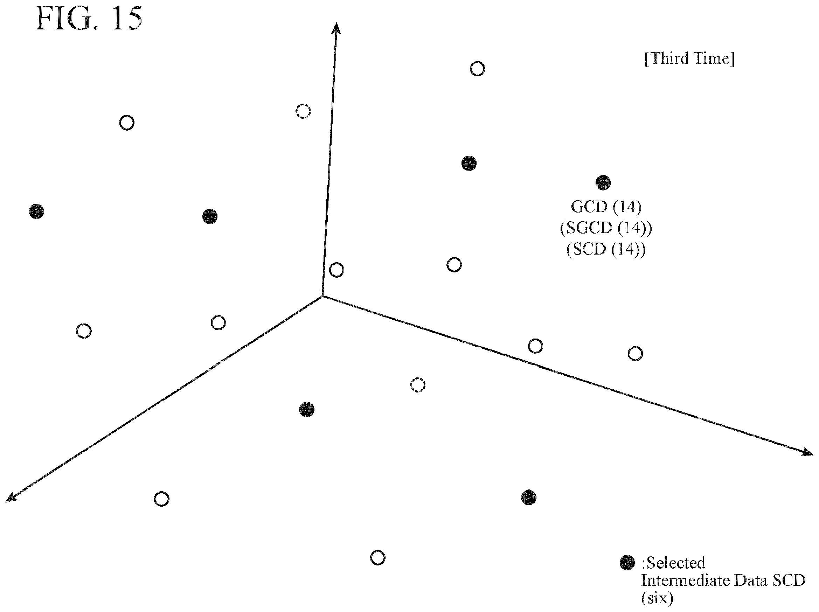

Herein, as illustrated in FIG. 15, for example, suppose that the first selection unit 12A selects the trained intermediate data GCD (14).

Step ST14: As illustrated in FIG. 7, the second selection unit 12B selects the trained intermediate data GCD (14) selected by the first selection unit 12A among the plurality of pieces of candidate input data KND, that is, the trained input data GND (14) corresponding to the selected trained intermediate data SGCD (14) as the selected input data SND (illustrated in FIG. 1).

The data processing device 10 performs the fourth processing, the fifth processing and so on in the same manner as described above.

### <Effects of Embodiment>

As described above, in the data processing device 10 of the embodiment, the first selection unit 12A selects the candidate intermediate data KCD having the longest K-neighbor distance KYav from the closest three selected intermediate data SCD, in other words, selects the candidate intermediate data KCD having a greater degree of heterogeneity when used for retraining.

After the selection, the second selection unit 12B selects, as the selected input data SND, the candidate input data KND corresponding to the selected candidate intermediate data KCD among the candidate input data KND including the trained input data GND and the untrained input data MND in order to use the candidate input data KND for retraining.

Thus, it is possible to suppress the retraining from being performed within a range in which the training has been performed and it is unnecessary to perform the retraining, and it is possible to promote the retraining to be performed in a range which is out of the range in which the training has been performed and in which it is desirable to perform the retraining.

In the selection of the candidate intermediate data KCD by the second selection unit 12B, for example, the ratio between the number of the plurality of pieces of selected trained intermediate data SGCD and the number of the plurality of pieces of selected untrained intermediate data SMCD is desirably substantially equal to the ratio between the number of the plurality of pieces of trained intermediate data GCD and the number of the plurality of pieces of untrained intermediate data MCD.

### Modification Example

### <Modification Example>

A modification example of the data processing device 10 according to the embodiment will be described

The data processing device 10 of the modification example is different from the data processing device 10 of the embodiment using four types of data, that is, the trained input data GND, the trained intermediate data GCD, the untrained input data MND, and the untrained intermediate data MCD, and uses only the latter two types of data, that is, the untrained input data MND and the untrained intermediate data MCD.

Therefore, in the data processing device 10 of the modification example, unlike the data processing device 10 of the embodiment, only the plurality of pieces of untrained input data MND constitute the plurality of pieces of candidate input data KND, and similarly, only the plurality of pieces of untrained intermediate data MCD constitute the plurality of pieces of candidate intermediate data KCD. In other words, unlike the data processing device 10 of the embodiment, it is unnecessary to generate the plurality of pieces of candidate input data KND, and it is unnecessary to generate the plurality of pieces of candidate intermediate data KCD.

### <Operation of Modification Example>

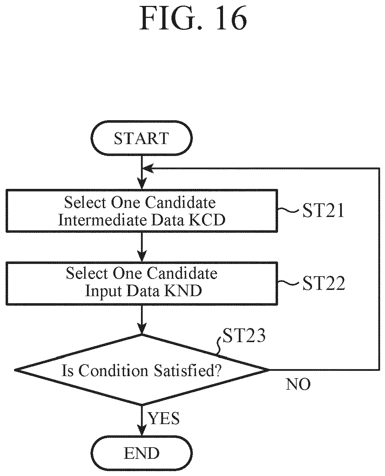

FIG. 16 is a flowchart illustrating an operation of the data processing device 10 according to the modification example.

The operation of the data processing device 10 of the modification example will be described with reference to the flowchart of FIG. 16.

### <First Processing>

Step ST21: A processor P (illustrated in FIG. 5), as the first selection unit 12A (FIG. 1), performs processing similar to that in step ST 13 (first time) of the embodiment, but unlike step ST 13 (first time) of the embodiment, selects, for example, the untrained intermediate data MCD (2) (illustrated in FIG. 8) among the plurality of pieces of candidate intermediate data KCD including only the plurality of pieces of untrained intermediate data MCD. In this case, an object is to acquire knowledge close to the knowledge acquired by training using all the untrained input data MND by training with a small number of data. On the other hand, the K-neighbor distance calculated to select the untrained intermediate data may be the K-neighbor distance with the data obtained by adding the trained intermediate data GCD in addition to the selected intermediate data SCD. In this case, an object is to preferentially select untrained intermediate data MCD having knowledge different from the knowledge acquired by training of the trained input data GND as retraining data.

Step ST22: The processor P selects, as the second selection unit 12B (illustrated in FIG. 1), untrained input data MND (2) corresponding to the selected untrained intermediate data MCD (2) among the plurality of pieces of candidate input data KND including only the plurality of pieces of untrained input data MND.

Step ST23: The processor P determines, as the control unit 13 (FIG. 1), whether or not the condition is satisfied.

Herein, suppose that the condition is not satisfied. The processing returns to step ST21 again after "NO".

### <Second Processing>

Step ST21: The first selection unit 12A performs processing similar to that in step ST 13 (second time) of the embodiment, but unlike step ST13 (second time) of the embodiment, selects, for example, the untrained intermediate data MCD (1) (illustrated in FIG. 8) among the plurality of pieces of candidate intermediate data KCD including only the plurality of pieces of untrained intermediate data MCD.

Step ST22: The second selection unit 12B selects untrained input data MND (1) corresponding to the selected untrained intermediate data MCD (1) among the plurality of pieces of candidate input data KND including only the plurality of pieces of untrained input data MND.

Step ST23: The control unit 13 determines whether or not the condition is satisfied.

Herein, suppose that the condition is not satisfied, and the processing returns to step ST21 again.

### <Third Processing>

Step ST21: The first selection unit 12A performs processing similar to that in step ST 13 (third time) of the embodiment, but unlike step ST13 (third time) of the embodiment, selects, for example, the untrained intermediate data MCD (3) (illustrated in FIG. 8) among the plurality of pieces of candidate intermediate data KCD including only the plurality of pieces of untrained intermediate data MCD.

Step ST22: The second selection unit 12B selects untrained input data MND (3) corresponding to the selected untrained intermediate data MCD (1) among the plurality of pieces of candidate input data KND including only the plurality of pieces of untrained input data MND.

Step ST23: The control unit 13 determines whether or not the condition is satisfied.

Herein, suppose that the condition is not satisfied, and the processing returns to step ST21 again.

The data processing device 10 of the modification example performs the fourth processing, the fifth processing and so on in the same manner as described above.

### <Effects of Modification Example>

In the data processing device 10 of the modification example, substantially similar to the data processing device 10 of the embodiment, it is possible to suppress the retraining from being performed within a range in which it is unnecessary to perform the retraining, and it is possible to promote the retraining in a range in which it is desirable to perform the retraining.

Components in the embodiment may be deleted, changed, or another component may be added as appropriate without departing from the gist of the present disclosure.

The data processing device according to the present disclosure can be used, for example, to select input data to be used when a machine learning model is retrained.

### REFERENCE SIGNS LIST

10: data processing device, 11A: first generating unit, 11B: second generating unit, 12A: first selection unit, 12B: second selection unit, 13: control unit, CD: intermediate data, CS: intermediate layer, DB: database, GCD: trained intermediate data, GND: trained input data, GSD: trained output data, K: storage medium, KCD: candidate intermediate data, KGM: machine learning model, KND: candidate input data, KY: distance, KYav: K-neighbor distance, M: memory, MCD: untrained intermediate data, MND: untrained input data, N: input unit, ND: input data, NS: input layer, P: processor, PR: program, S: output unit, SCD: selected intermediate data, SD: output data, SGCD: selected trained intermediate data, SMCD: selected untrained intermediate data, SND: selected input data, SS: output layer

## Claims

1. A data processing device comprising:
a first generating unit to generate a plurality of pieces of candidate input data by putting together a plurality of pieces of trained input data used for first training in a machine learning model and a plurality of pieces of untrained input data not used for the first training;
a second generating unit to generate a plurality of pieces of candidate intermediate data by putting together trained intermediate data given by inputting the plurality of pieces of the trained input data into the machine learning model and untrained intermediate data given by inputting the plurality of pieces of untrained input data into the machine learning model;
a first selection unit to select one piece of candidate intermediate data from among the plurality of pieces of the candidate intermediate data, the first selection unit more preferentially selecting the one piece of candidate intermediate data having a greater degree of heterogeneity when used for second training subsequent to the first training as compared with selected intermediate data including selected trained intermediate data that is the trained intermediate data already selected and selected untrained intermediate data that is the untrained intermediate data already selected; and
a second selection unit to select one piece of candidate input data, from among the plurality of pieces of the candidate input data, corresponding to the one piece of candidate intermediate data as data to be used at a time of the second training.

2. A data processing device comprising:
a first selection unit to select one piece of candidate intermediate data from among a plurality of pieces of candidate intermediate data which are untrained intermediate data given by inputting, to a machine learning model, a plurality of pieces of untrained input data not used for first training in the machine learning model, the first selection unit more preferentially selecting the one piece of candidate intermediate data having a greater degree of heterogeneity when used for second training subsequent to the first training as compared with selected intermediate data which is selected untrained intermediate data that is the untrained intermediate data already selected; and
a second selection unit to select one piece of candidate input data corresponding to the one piece of candidate intermediate data selected from among a plurality of pieces of candidate input data which are the plurality of pieces of untrained input data to be used at a time of the second training.

3. A data processing device comprising:
a first selection unit to select one piece of candidate intermediate data from among a plurality of pieces of candidate intermediate data which are untrained intermediate data given by inputting, to a machine learning model, a plurality of pieces of untrained input data not used for first training in the machine learning model, the first selection unit more preferentially selecting the one piece of candidate intermediate data having a greater degree of heterogeneity when used for second training subsequent to the first training as compared with trained intermediate data and selected intermediate data which is selected untrained intermediate data that is the untrained intermediate data already selected; and
a second selection unit to select one piece of candidate input data corresponding to the one piece of candidate intermediate data selected from among a plurality of pieces of candidate input data which are the plurality of pieces of untrained input data to be used at a time of the second training.

4. A data processing method comprising:
generating, by a first generating unit, a plurality of pieces of candidate input data by putting together a plurality of pieces of trained input data used for first training in a machine learning model and a plurality of pieces of untrained input data not used for the first training;
generating, by a second generating unit, a plurality of pieces of candidate intermediate data by putting together trained intermediate data given by inputting the plurality of pieces of the trained input data into the machine learning model and untrained intermediate data given by inputting the plurality of pieces of untrained input data into the machine learning model;
selecting, by a first selection unit, one piece of candidate intermediate data from among the plurality of pieces of the candidate intermediate data, the first selection unit more preferentially selecting the one piece of candidate intermediate data having a greater degree of heterogeneity when used for second training subsequent to the first training as compared with selected intermediate data including selected trained intermediate data that is the trained intermediate data already selected and selected untrained intermediate data that is the untrained intermediate data already selected; and
selecting, by a second selection unit, one piece of candidate input data, from among the plurality of pieces of the candidate input data, corresponding to the one piece of candidate intermediate data as data to be used at a time of the second training.

5. A data processing method comprising:
selecting, by a first selection unit, one piece of candidate intermediate data from among a plurality of pieces of candidate intermediate data which are untrained intermediate data given by inputting, to a machine learning model, a plurality of pieces of untrained input data not used for first training in the machine learning model, the first selection unit more preferentially selecting the one piece of candidate intermediate data having a greater degree of heterogeneity when used for second training subsequent to the first training as compared with selected intermediate data which is selected untrained intermediate data that is the untrained intermediate data already selected; and
selecting, by a second selection unit, one piece of candidate input data corresponding to the one piece of candidate intermediate data selected from among a plurality of pieces of candidate input data which are the plurality of pieces of untrained input data to be used at a time of the second training.

6. A data processing method comprising:
selecting, by a first selection unit, one piece of candidate intermediate data from among a plurality of pieces of candidate intermediate data which are untrained intermediate data given by inputting, to a machine learning model, a plurality of pieces of untrained input data not used for first training in the machine learning model, the first selection unit more preferentially selecting the one piece of candidate intermediate data having a greater degree of heterogeneity when used for second training subsequent to the first training as compared with trained intermediate data and selected intermediate data which is selected untrained intermediate data that is the untrained intermediate data already selected; and
selecting, by a second selection unit, one piece of candidate input data corresponding to the one piece of candidate intermediate data selected from among a plurality of pieces of candidate input data which are the plurality of pieces of untrained input data to be used at a time of the second training.
